# EUROPÄISCHE PATENTSCHRIFT

(11) **EP 3 256 229 B1**
(45) Veröffentlichungstag und Bekanntmachung des Hinweises auf die Patenterteilung: **10.04.2019**
(21) Anmeldenummer: 16704179.7
(22) Anmeldetag: 10.02.2016
(51) Int. Cl.: B01D 1/00, B01D 1/26, B01D 5/00, C02F 1/04, C02F 103/08

(54) **MEHRSTUFIGE DESTILLATIONSANLAGE, VERFAHREN ZUM BETREIBEN EINER SOLCHEN**
MULTI-STAGE DISTILLATION SYSTEM, METHOD FOR THE OPERATION THEREOF
INSTALLATION DE DISTILLATION À ÉTAGES MULTIPLES, PROCÉDÉ PERMETTANT DE FAIRE FONCTIONNER UNE INSTALLATION DE CE TYPE

(30) Priorität: 13.02.2015 CH 1982015
(43) Veröffentlichungstag der Anmeldung: 20.12.2017
(73) Patentinhaber: Thermal Purification Technologies Limited, 5033 Buchs (CH)
(72) Erfinder: LEHMANN, Markus, 5610 Wohlen (CH)
(74) Vertreter: Schneider Feldmann AG Patent- und Markenanwälte
(86) Internationale Anmeldenummer: PCT/EP2016/052811
(87) Internationale Veröffentlichungsnummer: WO 2016/128455

(56) Entgegenhaltungen:
- WO-A1-2008/122136
- WO-A2-2012/104662
- US-A- 3 627 646

## Beschreibung

### Technisches Gebiet

Die Erfindung betrifft eine Mehrstufige Destillationsanlage, wobei im Betrieb jede Stufe in einem höheren Druck- und Temperaturbereich arbeitet als ihre Folgestufe, wobei jede Stufe einen Verdampfer und einen Kondensator mit je einen druckfesten Behälter umfasst mit einem oberen Sprüheinlass zum Einleiten und Versprühen von zugefügter Flüssigkeit, sowie mit einem unteren Auslass, zum Auslassen von aufgefangener Flüssigkeit, sowie mit einem Dampfraum zwischen dem Sprüheinlass und der aufgefangenen Flüssigkeit, wobei der Dampfraum jedes Verdampfers mit dem Dampfraum des Kondensators derselben Stufe über ein druckfestes Dampfrohr mit derart grossem Querschnitt druckverbunden ist, dass sich im Betrieb der Druck in den beiden Dampfräumen einer Stufe stets ausgleichen kann, und wobei der Auslass jedes Verdampfers mit dem Sprüheinlass des nächsten Verdampfers und der Auslass des letzten Verdampfers mit dem Sprüheinlass des ersten Verdampfers mit jeweils einer druckfesten Flüssigkeitsleitung zu einem Verdampfer Kreislauf verbunden ist, und wobei der Auslass jedes Kondensators mit dem Sprüheinlass des vorherigen Kondensators und der Auslass des ersten Kondensators mit dem Sprüheinlass des letzten Kondensators mit einer druckfesten Flüssigkeitsleitung zu einem Kondensator Kreislauf verbunden ist. Zudem betrifft die Erfindung ein Verfahren zur Durchführung einer solchen Destillationsanlage sowie eine Steuerung zu dessen Betrieb.

### Stand der Technik

Destillationsanlagen sind seit langem bekannt. Sie dienen beispielsweise dem Aufbereiten von Wasser oder dem Trennen von Alkohol von anderen Flüssigkeiten und sind in vielen anderen Anlagen eingesetzt. Prinzipiell wird die zu destillierende Flüssigkeit unter Zufuhr von Wärme verdampft, um sie von den Rückständen, beispielsweise von Salzen oder von anderen Flüssigkeiten mit einem höheren Siedepunkt zu trennen. Der Dampf wird schliesslich in einer weiteren Kammer abgekühlt, wodurch er zum Destillat kondensiert.

In den letzten Jahren wurden die Anlagen derart verbessert, dass die Wirkungsgrade höher und die Steuerungen vereinfacht wurden. Eine vorteilhafte Anlage nach dem Stand der Technik mit einem hohen Wirkungsgrad ist in der WO 2008/122136 beschrieben. Sie wird bevorzugt in der Umgebung von Wärme abgebenden Anlagen wie Kraftwerken verwendet, deren abgegebene Wärmeenergie gratis oder kostengünstig genutzt werden kann. Eine solche Destillationsanlage kann insbesondere auch mehrstufig eingerichtet werden, um den gesamten Bereich der zur Verfügung gestellten Temperaturdifferenz, beispielsweise 50-100°C, zu nutzen.

Um die zur Verfügung gestellte Wärme für den Bedarf optimal zu nutzen, stehen Wärmetauscher und andere bekannte Hilfsmittel zur Verfügung, die hinreichend bekannt sind. Zusätzlich braucht der Betrieb einer solchen Destillationsanlage auch elektrischen Strom, namentlich unter anderem um die Flüssigkeiten mittels Pumpen zu fördern oder um Vakuumpumpen zum Absaugen von nicht kondensierbaren Gasen zu betreiben. Der Strombedarf für den Betrieb solcher Anlagen ist ein wesentlicher Teil der gesamten Betriebskosten. Um Destillationsanlagen günstiger betreiben zu können, muss daher der Strombedarf gesenkt werden.

### Beschreibung der Erfindung

Aufgabe der vorliegenden Erfindung ist es demnach, eine mehrstufige Destillationsanlage eingangs beschriebener Art derart zu verbessern, dass der Stromverbrauch beim Betrieb gesenkt wird. Eine weitere Aufgabe der vorliegenden Erfindung ist es, ein Verfahren zu beschreiben, welches eine solche Destillation ausführt sowie eine Steuerung zu dessen Betrieb darzulegen.

Die Aufgabe wird gelöst durch die Merkmale der unabhängigen Patentansprüche der jeweiligen Kategorien.

Erfindungsgemäss umfasst die eingangs beschriebene Destillationsanlage eine druckfeste Dampfleitung, welche mit einem ersten Ende mit einer der druckfesten Flüssigkeitsleitungen zwischen zwei benachbarten Kondensatoren oder mit der druckfesten Flüssigkeitsleitung zwischen dem letzten und dem ersten Verdampfer verbunden ist. Zudem ist das zweite Ende der druckfesten Dampfleitung mit einem Dampfraum verbunden, der im Betrieb einen höheren Druck aufweist als der Druck in der druckfesten Flüssigkeitsleitung, zum Beaufschlagen der Flüssigkeit mit einem höheren Druck sowie zum Fördern der Flüssigkeit.

Durch diese Druckbeaufschlagung wird die Flüssigkeit in der Flüssigkeitsleitung unter einen höheren Druck gesetzt, was ihr ermöglicht, in einer Stufe mit einer höheren Temperatur zu verdampfen. Zudem kann die Flüssigkeit durch die Druckbeaufschlagung in einen Behälter befördert werden, der auf einem höheren Potenzial angeordnet ist, ohne dass dafür elektrischer Strom verwendet werden muss. Dadurch wird während dem kontinuierlichen Betrieb gar keine Pumpe mehr benötigt.

Pumpen im Verdampfer- und im Kondensator- Kreislauf werden zwar noch angebracht, sind aber nur notwendig um den Prozess anfangs zum Starten zu bringen. Schon nach wenigen Minuten läuft der Prozess selbständig, ohne dass Pumpen für die Zirkulation der Flüssigkeiten in den Kreisläufen betrieben werden müssen. Einzig eine Vakuumpumpe für das Absaugen von nicht kondensierbaren Gasen am Ende der Kondensationswege in den Kondensatoren muss zeitweise noch in Betrieb genommen werden, allerdings nur für kurze Zeit.

Der Stromverbrauch kann in der erfindungsgemässen Destillationsanlage drastisch gesenkt werden. Zudem ist in jedem der Kreisläufe nur noch je eine Pumpe notwendig, was auch die Investitionskosten der Destillationsanlage senkt.

Das erfindungsgemässe Verfahren zum Betreiben eines Destillationsprozesses unter Verwendung einer erfindungsgemässen Destillationsanlage, welche einen Zulauf in den Verdampfer Kreislauf, einen Auslass aus dem Verdampfer Kreislauf, sowie einen Destillat-Auslass aus dem Kondensator Kreislauf umfasst, ist durch die folgenden Prozessschritte gekennzeichnet:
Überwachen der Flüssigkeitsmengen in beiden Kreisläufen; Überwachen der Konzentration der Rückstände im Verdampfer Kreislauf; Auslassen von Flüssigkeit mit hoher Konzentration der Rückstände am Auslass, sobald die Flüssigkeit im Verdampfer Kreislauf einen vorgegebenen Maximalpegel und/oder die Konzentration der Rückstände im Verdampfer Kreislauf einen vorgegebenen Maximalwert erreicht hat; Auslassen von Destillat aus dem Kondensator Kreislauf am Destillat-Auslass, sobald die Flüssigkeit im Kondensator Kreislauf einen vorgegebenen Maximalpegel erreicht hat; Einlass von Flüssigkeit in den Kondensator Kreislauf am Zulauf, sobald die Flüssigkeit im Verdampfer Kreislauf einen vorgegebenen Minimalpegel und/oder die Konzentration der Rückstände im Verdampfer Kreislauf einen vorgegebenen Maximalwert erreicht hat. Diese Schritte werden wiederholt, bis der Prozess gestoppt werden soll.

Vorzugsweise wird erst dann Flüssigkeit aus dem Verdampfer Kreislauf ausgelassen, wenn sowohl die Maximalkonzentration als auch der Maximalpegel erreicht sind, und zwar so viel, bis der Minimalpegel erreicht ist. Dann wird, durch Zufuhr von frischer Flüssigkeit bis zum Maximalpegel, die Konzentration gesenkt. Der Pegel wird fortan jeweils wieder bis zum Maximalpegel angehoben, sobald der Minimalpegel oder die Maximalkonzentration erreicht ist.

In einem bevorzugten Verfahren wird eine Destillationsanlage verwendet, welche eine Vakuumpumpe umfasst, die durch eine Gasleitung mit dem Ende jedes Kondensationsweges jedes Kondensators verbundenen ist. Das Verfahren ist gekennzeichnet durch die Verfahrensschritte:
Bestimmung der Temperaturdifferenzen in den Dampfräumen der Verdampfer und Kondensatoren derselben Stufe; Entfernen von nicht kondensierbaren Gasen im Dampfraum eines Kondensators durch die Gasleitung mit Hilfe der Vakuumpumpe, sobald die entsprechende Temperaturdifferenz einen vorgegebenen Maximalwert erreicht hat, bis sie einen vorgegebenen Minimalwert unterschritten hat. Die genannten Schritte werden solange wiederholt, bis der Prozess gestoppt werden soll.

Die erfindungsgemässe Steuerung zum Betreiben eines erfindungsgemässen Verfahrens umfasst Anschlüsse für Sensoren zum Einlesen von Messdaten, einen Prozessor zum Auswerten der Messdaten sowie Anschlüsse zum Verändern der Einstellungen von Ventilen und Pumpen.

### Kurze Beschreibung der Zeichnungen

In der Folge wird die Erfindung unter Bezug der Figuren näher beschrieben. Gleiche Bezugszeichen verweisen jeweils auf dieselben Sachverhalte. Es zeigen:
- Fig. 1: eine mehrstufige Destillationsanlage nach dem Stand der Technik;
- Fig. 2: eine erfindungsgemässe mehrstufige Destillationsanlage;
- Fig. 3: eine Destillationsanlage nach Fig. 2 mit beispielhaften Temperatur- und Druckwerten.

### Wege zur Ausführung der Erfindung

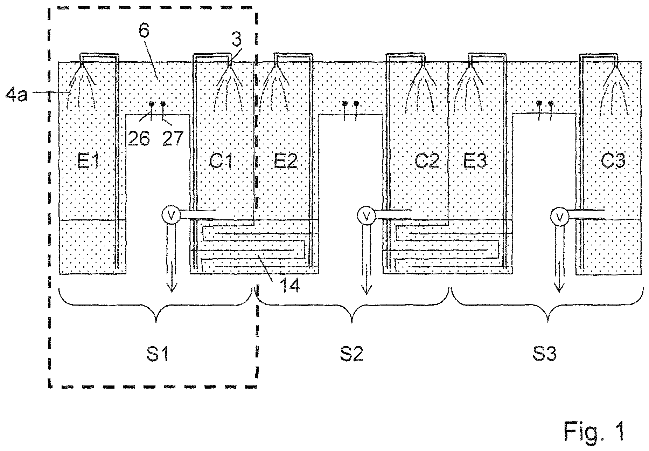

Fig. 1 zeigt eine mehrstufige Destillationsanlage 1 nach dem Stand der Technik. Es sind drei Stufen abgebildet, die jeweils mit einer unteren Klammer S1, S2 und S3 bezeichnet sind. Die Stufe S1 ist zudem mit einer gestrichelten Linie umrandet, bis auf einen Teil, der durch einen Wärmetauscher 14 mit der Stufe S2 verbunden ist. Jede Stufe S besteht aus einem Verdampfer (oder Evaporator) E1, E2, E3, der jeweils die linke Kammer jeder Stufe S1, S2, S3 ausmacht, und einem Kondensator (oder Condensor) C1, C2, C3, der jeweils die rechte abgebildete Kammer der Stufe S ausmacht. Die Verdampfer und Kondensatoren weisen alle einen Dampfraum auf, wobei die Dampfräume der Verdampfer E1, E2, E3 und der Kondensatoren C1, C2, C3 der jeweils selben Stufe S1, S2, S3 durch jeweils einen verbindenden Dampfraum 6 miteinander verbunden sind, wobei dieser verbindende Dampfraum 6 derart gross bemessen ist, dass sich der Druck P innerhalb der Dampfräume dieser Stufe ungehindert ausgleichen kann. In beiden Kammern jeder Stufe S1, S2, S3 herrscht demnach derselbe Druck P1, P2, P3. In jeder Kammer wird Flüssigkeit 4 aus der Kammer nach oben zu einem Sprüheinlass 3 gebracht und dort versprüht. Die versprühten Flüssigkeiten 4a in den Verdampfern E1, E2, E3 haben eine leicht höhere Temperatur als die versprühten Flüssigkeiten 4a der Kondensatoren C1, C2, C3 der jeweils selben Stufe. Die Temperaturen der Verdampfer E1, E2, E liegen entsprechend jeweils leicht über, die Temperaturen der Kondensatoren C1, C2, C3 leicht unter den TemperaturenTs1, Ts2, Ts3 der Sättigungskurve für den jeweiligen Dampfdruck P1, P2, P3, die für die jeweilige Flüssigkeit bekannt ist.

Aus diesem Grund wird die in jedem Verdampfer versprühte Flüssigkeit 4a teilweise verdampfen und in die benachbarte Kammer des dazugehörigen Kondensators strömen, wo sie mit den kühleren Tropfen zusammenstösst und ihrerseits wieder kondensiert. Mit der Zeit wandert daher abgedampfte Flüssigkeit von jedem Verdampfer in den Kondensator derselben Stufe. Dort kann das Destillat abgeschöpft werden, während im Verdampfer neue Flüssigkeit eingeleitet werden kann.

Die erste Stufe S1 arbeitet demnach mit einer Temperatur T1,1 im Verdampfer E1, resp. mit der Temperatur T1,2 im Kondensator C1, indem die Flüssigkeiten 4a mit den angegebenen Temperaturen in die Kammern gesprüht werden. Die benachbarte Kammer des Kondensators C1 ist der Verdampfer E2, der mit dem Kondensator C2 die zweite Stufe S2 bildet. Diese Kammern der Stufe S2 arbeiten entsprechend mit den Temperaturen T2,1 im Verdampfer E2 und T2,2 im Kondensator C2, wobei die aneinander liegenden Kammern C1 und E2 auf dieselbe Temperatur gesetzt sind. Daher gilt: T1,2 = T2,1. Um diese Temperaturgleichheit zu erreichen sind die unteren Bereiche der Kammern C1 und E2 als Wärmetauscher 14 ausgestaltet. Dasselbe gilt für die Kammern C2 und E3, die ebenfalls mit einem Wärmetauscher 14 miteinander verbunden sind, damit die Temperatur T2,2 des Kondensators C2 und die Temperatur T3,1 des Verdampfers E3 stets dieselben Temperaturen behalten.

Temperatur- und Druckmessgeräte 26, 27 in jedem Dampfraum 6 dienen der Prozessüberwachung. Zudem erlaubt eine Vakuumpumpe V am Ende jedes Kondensationsweges das Absaugen von nicht kondensierbaren Gasen im System. Dies ist wichtig, damit der Prozess effizient läuft.

Nach dem Stand der Technik sind die einzelnen Stufen lediglich mit Wärmetauschern miteinander verbunden, sodass kein Austausch oder Fluss von Flüssigkeiten oder Dämpfen zwischen den verschiedenen Stufen S entstehen kann. Die Stufen sind lediglich über Wärmetauscher miteinander verbunden. Die einzelnen Stufen S arbeiten zwar in verschiedenen, jeweils angrenzenden Temperaturbereichen, aber jede für sich.

### Bevorzugtes Ausführungsbeispiel

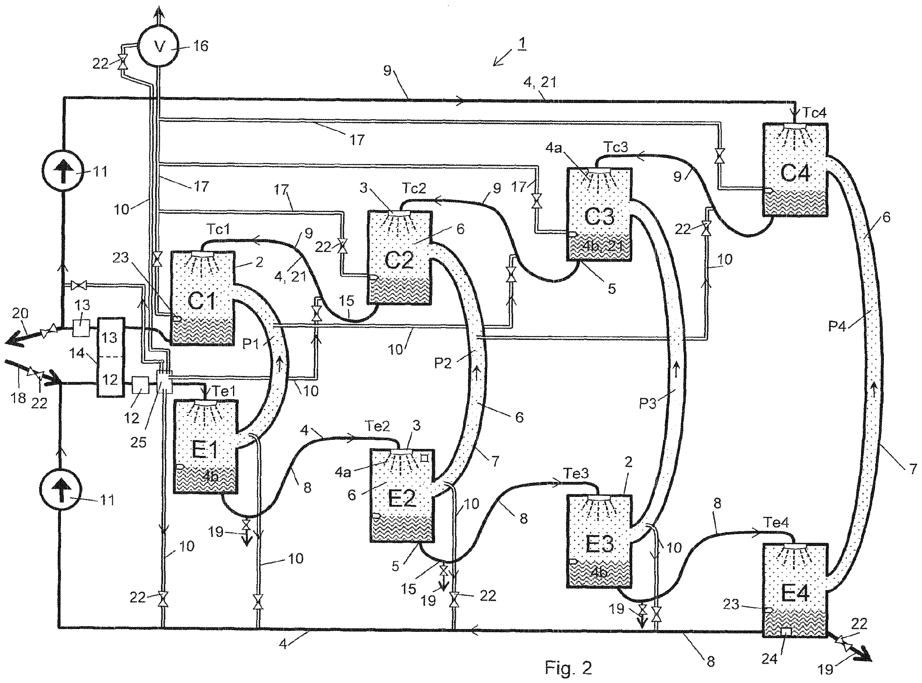

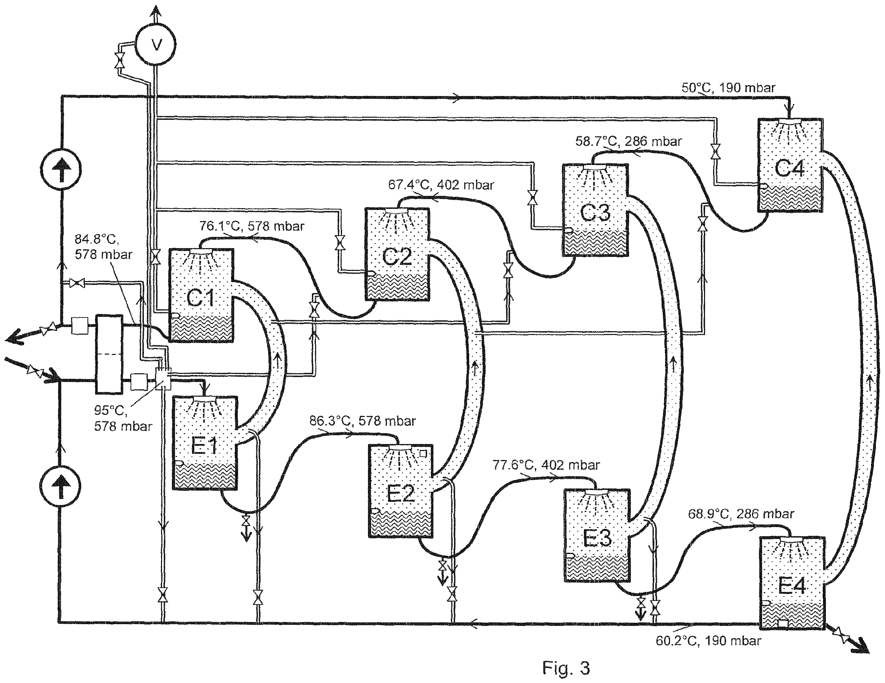

Fig. 2 zeigt ein erfindungsgemässes Ausführungsbeispiel. Die Darstellung zeigt eine mehrstufige Destillationsanlage 1 mit Stufen Si mit i=1,...n, (n=4) wobei im Betrieb jede Stufe Si in einem höheren Druck- und Temperaturbereich Pi, Ti arbeitet als ihre Folgestufe Si+1. In Fig. 3 ist eine Anlage gemäss Fig. 2 angegeben, bei denen Beispiele von Druck- und Temperaturwerten der einzelnen Behälter und Druckräumen angegeben sind, die sich gemäss der Erfindung einstellen können.

Jede Stufe Si umfasst einen Verdampfer Ei und einen Kondensator Ci, wobei jeder Verdampfer Ei und jeder Kondensator Ci einen druckfesten Behälter 2 umfasst mit einem oberen Sprüheinlass 3 zum Einleiten und Versprühen von zugefügter Flüssigkeit 4a im Behälter 2, sowie mit einem unteren Auslass 5, zum Auslassen von im Behälter 2 aufgefangener Flüssigkeit 4b. Zudem umfasst jeder Behälter 2 einem Dampfraum 6 zwischen dem Sprüheinlass 3 und der aufgefangenen Flüssigkeit 4b, wobei der Dampfraum 6 jedes Verdampfers Ei mit dem Dampfraum 6 des Kondensators Ci derselben Stufe Si über ein druckfestes Dampfrohr 7 mit derart grossem Querschnitt druckverbunden ist, dass sich im Betrieb der Druck Pi in den beiden Dampfräumen 6 einer Stufe Si stets ausgleichen kann. Der Auslass 5 jedes Verdampfers Ei ist mit dem Sprüheinlass 3 des nächsten Verdampfers Ei+1 und der Auslass 5 des letzten Verdampfers En ist mit dem Sprüheinlass 3 des ersten Verdampfers E1 mit jeweils einer druckfesten Flüssigkeitsleitung 8 zu einem Verdampfer Kreislauf verbunden. Analog dazu ist der Auslass 5 jedes Kondensators Ci mit dem Sprüheinlass 3 des vorherigen Kondensators Ci-1 und der Auslass 5 des ersten Kondensators C1 mit dem Sprüheinlass 3 des letzten Kondensators Cn mit einer druckfesten Flüssigkeitsleitung 9 zu einem Kondensator Kreislauf verbunden. Erfindungsgemäss umfasst die Destillationsanlage mindestens eine druckfeste Dampfleitung 10, welche mit einem ersten Ende mit einer der druckfesten Flüssigkeitsleitungen 9 zwischen Kondensatoren Ci+1 und Ci [i=1 bis 3] oder mit der druckfesten Flüssigkeitsleitung 8 zwischen den Verdampfern En und E1, und mit einem zweiten Ende mit einem Dampfraum verbunden ist, der im Betrieb einen höheren Druck P aufweist als der Druck Pi im Dampfraum 6 des Kondensators Ci resp. als der Druck Pn im Dampfraum 6 des Verdampfers En, zum Beaufschlagen der Flüssigkeit 4 mit einen höheren Druck sowie zum Fördern der Flüssigkeit 4.

Die Anordnung der Behälter 2 kann insbesondere auch so geändert werden, dass die Kreisläufe der Verdampfer und Kondensatoren auf gleichem Niveau angeordnet sind. Dabei wäre beispielsweise der Kondensator Cn und der Verdampfer E1 auf demselben oder ähnlichen Niveau, ebenso der Kondensator C1 und der Verdampfer En. Dies verkürzt die Länge der verbindenden Dampfräume 6. Die angegebenen Figuren 2 und 3 wurden aus Gründen der Übersichtlichkeit so dargestellt und sind als schematische Darstellungen zu verstehen.

Erfindungsgemäss werden in der hier beschriebenen Destillationsanlage 1 Verdampfer E und Kondensatoren C räumlich voneinander getrennt und durch Rohre mit derart grossem Querschnitt miteinander verbunden, dass der Druckunterschied in den beiden Kammern 2 weniger als 10 mbar beträgt. Wichtig ist, dass dieser Druckausgleich stets gewährleistet ist. Durch diese räumliche Trennung der Kammern 2 stehen nun Möglichkeiten offen, die Kammern derselben Art, namentlich jeweils Verdampfer und Kondensatoren, miteinander zu verbinden und räumlich so anzuordnen, dass durch die potentielle Energie der einzelnen Kammern 2 unter Berücksichtigung der jeweiligen Dampfdrücke in den verschiedenen Stufen Si die Flüssigkeiten 4 ohne Unterstützung von Pumpen in die nächste Kammer 2 fliessen. Dies gelingt namentlich zwischen den Verdampfern E1 bis En und zwischen den Kondensatoren C1 und Cn. Somit ist nur noch Unterstützung notwendig in den Flüssigkeitsleitungen zwischen den Kondensatoren Cn bis C1 sowie zwischen den Verdampfern E4 und E1.

Diese Unterstützung kann entweder durch Pumpen geliefert werden oder durch Dampfdruck. Wenn Dampf mit einem höheren Druck in eine Flüssigkeitsleitung eingespeist wird, als der Druck in der Zielkammer aufweist, wird die Flüssigkeit in der Leitung in die Zielkammer befördert. Dazu kann Dampf aus einem Dampfraum der Destillationsanlage 1 entnommen werden. Falls aber Dampf mit geeigneten Druck- und Temperaturverhältnissen in einer anderen nahen Quelle zur Verfügung steht, ist es natürlich auch möglich, diesen zu verwenden. Zudem kann in der Flüssigkeitsleitung vor dem Verdampfer E1 eine Dampfkammer 25 eingerichtet werden, in der die durchfliessende Flüssigkeit teilweise zu Dampf wird. Dieser Dampf ist der heisseste der gesamten Destillationsanlage 1 und zudem auch der mit dem höchsten Druck. Der Druck in dieser Dampfkammer 25 ist noch höher als der Druck im Verdampfer E1. Von dieser Dampfkammer 25 aus kann Flüssigkeit 4 gefördert und mit Druck beaufschlagt werden, die unter wenig tieferen Druck gebracht werden muss. Beispiele sind in Fig. 2 und 3 ersichtlich. Die Dampfräume 6 aus Stufen S mit niedrigeren Drucken können entsprechende Flüssigkeiten fördern, deren Zielbehälter 2 unter niedrigerem Druck stehen als die Dampfräume 6, von denen die Dampfleitungen 10 ihren Druck her haben.

Vorzugsweise verfügt die Destillationsanlage 1 über je eine Pumpe 11 in der Flüssigkeitsleitung 8 des Verdampfer Kreislaufs sowie in der Flüssigkeitsleitung 9 des Kondensator Kreislaufs, zum Erreichen der vorgegebenen Drucke der Flüssigkeiten 4 bei Prozessbeginn. Diese müssen jeweils nur wenige Minuten lang laufen, bis sich die Druck- und Temperaturverhältnisse in allen Behältern 2 ideal eingestellt haben. Der Prozess läuft dann selbständig. Die Pumpen 11 sind vorzugsweise in den Verbindungsleitungen 8, 9 zwischen den Behältern C1 und Cn resp. zwischen den Behältern En und E1 angeordnet.

Zudem verfügt die Destillationsanlage 1 vorzugsweise über eine Heizung 12 in der Flüssigkeitsleitung 8 des Verdampfer Kreislaufs vor dem Verdampfer E1 und über ein Kühlaggregat 13 in der Flüssigkeitsleitung des Kondensator Kreislaufs vor dem Kondensator Cn zum Erzielen der vorgegebenen Temperaturen im Verdampfer E1 und im Kondensator Cn. Diese Heizung 12 und dieses Kühlaggregat 13 sind vorzugsweise mindestens teilweise zusammen als Wärmetauscher 14 ausgestaltet. Da der Wärmetauscher 14 aber nicht die gewünschten Zieltemperaturen der Folgebehälter Cn resp. E1 erreichen können, sind in den Leitungen 8, 9 noch jeweils ein separates Kühlaggregat 13 in der Flüssigkeitsleitung des Kondensator Kreislaufs sowie eine separate Heizung 12 in der Flüssigkeitsleitung 8 des Verdampfer Kreislaufs notwendig.

Es hat sich gezeigt, dass es zum Anlaufen des Prozesses vorteilhaft ist, wenn noch ausreichend Flüssigkeit 4 in den einzelnen Abschnitten der Flüssigkeitsleitungen 8, 9 vorhanden ist. Um dies sicherzustellen können in den Flüssigkeitsleitungen 9, 8 zwischen den Kondensatoren Cn bis C1 und/oder zwischen den Verdampfern E1 bis En Siphons 15 angeordnet sein, zum Verhindern des Leerlaufens einzelner Kondensatoren Ci und/oder Verdampfern Ei bei Systemstillstand.

In einer weiteren bevorzugten Anordnung verfügen die Siphons 15 in den Flüssigkeitsleitungen 8 zwischen den Verdampfern E1 und En über einen Mittigen Ausguss. Es hat sich gezeigt, dass sich dort vermehrt Rückstände ansammeln, die so in hoher Konzentration einfach aus dem Kreislauf entfernt werden können.

Damit das Verfahren optimal läuft und möglichst viel der eingeleiteten Flüssigkeit verdampft wird, müssen von Zeit zu Zeit nicht kondensierbare Gase, die sich am Ende des Kondensationsweges ansammeln, von den Dampfräumen 6 entfernt werden. Dazu verfügt jeder Kondensator Ci am Ende des Destillationsweges über eine mit einer Vakuumpumpe 16 verbundene Gasleitung 17. Bei Bedarf wird die Vakuumpumpe 16 in Betrieb genommen, was aber auch jeweils nur kurzzeitig nötig ist, in der Regel weniger als 5% der Betriebszeit.

Es hat sich gezeigt, dass die Vakuumpumpe 16 ebenfalls mit Dampf betrieben werden kann. Um diese im Betrieb zu speisen muss sie mit einer druckfesten Dampfleitung 10 verbunden sein. Der Vakuumpumpe 16 wird dadurch Dampf zugeführt, der einen höheren Druck P aufweist als die Dampfräume 6, in denen Gase abgesaugt werden sollen.

Dies führt dazu, dass im Betrieb überhaupt kein Strom gebraucht wird, nachdem der Prozess angelaufen ist und einen stabilen Zustand erreicht hat.

Die einzelnen Behälter 2 sind zudem vorzugsweise derart nivelliert zueinander ausgerichtet, dass die potentielle Energie der Flüssigkeit optimal genutzt werden kann. Erfindungsgemäss ist jeder Verdampfer Ei+1 auf einem derart tieferem Niveau angeordnet als der vorhergehende Verdampfer Ei, dass während der Ausführung des Prozesses die Flüssigkeit 4 alleine durch Druck- und Niveauunterschiede von jedem Verdampfer Ei in den jeweils folgen Verdampfer Ei+1 fliesst, ohne dass dafür eine elektrisch betriebene Pumpe notwendig ist. Da jede Folgestufe Si+1 in einem niedrigeren Druck arbeitet als ihre vorherige Stufe S1, kann die Folgestufe Si+1 entsprechend höher angeordnet werden, sodass die Flüssigkeit wegen ihres erhöhten Drucks hinauf fliesst.

Entsprechend ist jeder Kondensator Ci+1 auf einem derart gelegenem Niveau im Vergleich zu seinem folgendem Kondensator Ci angeordnet, dass während der Prozessausführung die Flüssigkeit vom Kondensator Ci+1 durch Druck-, Niveauunterschiede und/oder durch die Förderkraft einer Dampfleitung in den jeweils nächsten Kondensator Ci fliesst, ohne dass dafür eine elektrisch betriebene Pumpe notwendig ist. Da im Kondensator Kreislauf die Fliessrichtung gegengerichtet ist zur Fliessrichtung im Verdampfer, fliesst die Flüssigkeit von Behältern 2 mit tieferen Drücken zu Behältern 2 mit höheren Drücken. Dies kann teilweise unterstützt werden, indem die Kondensatoren der höheren Stufen höher angeordnet sind als die Kondensatoren der tieferen Stufen. Zur Unterstützung wird zusätzlich die Flüssigkeit durch die Zufuhr von Dampfleitungen 10 mit Dampf unter höherem Druck zugeführt. So kann vermieden werden, dass Pumpen eingesetzt werden müssen, die Strom verbrauchen.

Zudem sind die Kondensatoren C1 und Cn derart nivelliert angeordnet, dass während der Prozessausführung die Flüssigkeit 4 vom Kondensator C1 durch Druck- und Niveauunterschiede über die Flüssigkeitsleitung 9 des Kondensator Kreislaufs vom Kondensator C1 zum Kondensator Cn fliesst, ohne dass dafür eine elektrisch betriebene Pumpe notwendig ist. Da der Druck in C1 viel höher ist als in Cn, kann eine grosse Höhe überwunden werden, ohne dass dafür eine Pumpe notwendig ist.

Die Verdampfer En und E1 sind vorzugsweise auch derart nivelliert angeordnet, dass während der Prozessausführung die Flüssigkeit 4 vom Verdampfer En durch Druck- und Niveauunterschiede und durch die Förderkraft einer oder mehrerer Dampfleitungen 10 über die Flüssigkeitsleitung 8 des Verdampfer Kreislaufs vom Verdampfer En zum Verdampfer E1 fliesst, ohne dass dafür eine elektrisch betriebene Pumpe notwendig ist. In diesem Abschnitt der Flüssigkeitsleitung 8 muss sowohl Höhe überwunden werden als auch Druck beaufschlagt werden. Dies wird vorzugsweise stufenweise erreicht, indem mehrere Dampfleitungen 10 aus verschiedenen Stufen S in die Flüssigkeitsleitung 8 eingebracht werden. Die verschiedenen Dampfleitungen 10 können auch alle an derselben Stelle in die Flüssigkeitsleitung 8 eingeleitet aber nacheinander betrieben werden, sodass immer die jeweils bestgeeignetste Dampfleitung 10 in Betrieb ist.

Die Dampfleitungen 10 können wahlweise auch innerhalb der Flüssigkeitsleitung 8, 9 geführt werden.

Die erfindungsgemässe Destillationsanlage 1 umfasst einen Zulauf 18 in den Verdampfer Kreislauf, zum Zuführen von zu destillierender Flüssigkeit 4, sowie einen Auslass 19 aus dem Verdampfer Kreislauf zum Auslassen von Flüssigkeit 4 mit hoher Konzentration der Rückstände, sowie einen Destillat-Auslass 20 aus dem Kondensator Kreislauf zum Auslassen des durch die Anlage erzeugten Destillats 21. Diese sind in Fig. 2 dargestellt.

Zudem umfasst jede Dampfleitung 10 und/oder jede Gasleitung 17 ein Ventil 22 zum Regeln der Durchflussmenge. Diese Ventile 17 sind vorzugsweise steuerbar und mit einer Regeleinrichtung verbunden.

Mindestens die Behälter 2 des ersten Kondensators C1 und des letzten Verdampfers E4 umfassen je einen Pegelsensor 23 zum Ermitteln der Pegel der in den Behältern 2 aufgefangenen Flüssigkeit 4b. Die anderen Behälter 2 können ebenfalls solche Pegelsensoren 23 aufweisen. Zum Regeln des Prozesses sind aber insbesondere die beiden genannten Pegelsensoren 23 notwendig. Zusätzlich verfügt die bevorzugte Destillationsanlage 1 im Verdampfungskreislauf, vorzugsweise im Bereich des letzten Verdampfers En, über einen Sensor 24 zur Messung der Konzentration der Rückstände. Die Sensoren 23, 24 sind ebenfalls vorzugsweise steuerbar und mit einer Regeleinrichtung verbunden, die nicht dargestellt ist.

In der Folge wird das erfindungsgemässe Verfahren zum Betreiben eines Destillationsprozesses unter Verwendung einer erfindungsgemässen Destillationsanlage 1 beschrieben, welche einen Zulauf 18 in den Verdampfer Kreislauf umfasst, zum Zuführen von zu destillierender Flüssigkeit 4, sowie einen Auslass 19 aus dem Verdampfer Kreislauf, zum Auslassen von Flüssigkeit 4 mit hoher Konzentration der Rückstände, sowie einen Destillat-Auslass 20 aus dem Kondensator Kreislauf, zum Auslassen des durch die Destillationsanlage erzeugten Destillats 21. Erfindungsgemäss werden in diesem Verfahren die folgenden Prozessschritte durchgeführt:
Überwachen der Flüssigkeitspegel im Verdampfer Kreislauf und im Kondensator Kreislauf; Überwachen der Konzentration der Rückstände im Verdampfer Kreislauf; Auslassen von Flüssigkeit mit hoher Konzentration der Rückstände am Auslass 19, sobald der Flüssigkeitspegel im Verdampfer Kreislauf einen vorgegebenen Maximalpegel und/oder die Konzentration der Rückstände im Verdampfer Kreislauf einen vorgegebenen Maximalwert erreicht hat; Auslassen von Destillat aus dem Kondensator Kreislauf am Destillat-Auslass 20, sobald der Flüssigkeitspegel im Kondensator Kreislauf einen vorgegebenen Maximalpegel erreicht hat; Einlass von Flüssigkeit 4 in den Kondensator Kreislauf am Zulauf 18, sobald der Flüssigkeitspegel im Verdampfer Kreislauf einen vorgegebenen Minimalwert und/oder die Konzentration der Rückstände im Verdampfer Kreislauf einen vorgegebenen Maximalwert erreicht hat. Die oben genannten Schritte werden solange wiederholt, bis der Prozess gestoppt werden soll.

Bemerkenswert im genannten Verfahren ist die Tatsache, dass sich der Druck und die Temperaturen in den einzelnen Kammern selbst regulieren, sobald die Rahmenbedingungen gegeben sind. Einzig die Zu- und Abfuhr von Flüssigkeit resp. Destillat wird geregelt. Zu Prozessbeginn muss zudem darauf geachtet werden, dass die Flüssigkeiten, welche in den Verdampfer E1 und in den Kondensator Cn einfliessen, den vorgegebenen Druck- und Temperaturverhältnissen entsprechen. Dies wird durch die Heizung 12 sowie das Kühlaggregat 13 erreicht.

Um den Prozess zu verbessern, sollten nicht kondensierbare Gase aus dem Kondensator Kreislauf entfernt werden. Dazu weist jeder Kondensator Ci am Ende des Destillationsweges eine mit einer Vakuumpumpe 16 verbundene Gasleitung 17 auf. Das Verfahren wird durch folgende Verfahrensschritte ergänzt:
Bestimmung der Temperaturdifferenzen dTi in den Dampfräumen 6 der Behälter 2 von Verdampfer Ei und Kondensator Ci derselben Stufe Si; Entfernen von nicht kondensierbaren Gasen im Dampfraum 6 des Kondensators Ci durch die Gasleitung 17 mit Hilfe der Vakuumpumpe 16, sobald die Temperaturdifferenz dTi einen vorgegebenen Maximalwert erreicht hat, bis dTi einen vorgegebenen Minimalwert erreicht hat; Wiederholen dieser Schritte solange, bis der Prozess gestoppt werden soll.

Eine erfindungsgemässe Steuerung zum Betreiben eines erfindungsgemässen Verfahrens, umfasst Anschlüsse für Sensoren zum Einlesen von Messdaten, einen Prozessor zum Auswerten der Messdaten sowie Anschlüsse zum Verändern der Einstellungen von Ventilen 22 und Pumpen 11, 16.

Die Ventile 22 sind in der Regel offen. Zu Prozessbeginn kann es aber sein, dass einige Ventile 22 geschlossen oder gedrosselt sind.

### Bezugszeichenliste

- 1: Destillationsanlage
- 2: Behälter
- 3: Sprüheinlass
- 4: Flüssigkeit; 4a versprühte Flüssigkeit; 4b aufgefangene Flüssigkeit
- 5: Auslass
- 6: Dampfraum
- 7: Dampfrohr
- 8: Flüssigkeitsleitung zu einem Verdampfungskreislauf
- 9: Flüssigkeitsleitung zu einem Kondensatorkreislauf
- 10: Dampfleitung
- 11: Pumpe
- 12: Heizung
- 13: Kühlaggregat
- 14: Wärmetauscher
- 15: Siphons
- 16: Vakuumpumpe
- 17: Gasleitung
- 18: Zulauf
- 19: Auslass von Flüssigkeit mit hoher Konzentration der Rückstände
- 20: Destillat-Auslass
- 21: Destillat
- 22: Ventil
- 23: Pegelsensor
- 24: Sensor zur Messung der Konzentration der Rückstände
- 25: Dampfkammer
- 26: Temperatursensor
- 27: Drucksensor

- E: Verdampfer, E1, ... En
- C: Kondensator, C1, ... Cn
- S: Stufe, S1, ... Sn

## Patentansprüche

1. Mehrstufige Destillationsanlage (1) mit Stufen Si mit i=1,...n, wobei im Betrieb jede Stufe Si in einem höheren Druck- und Temperaturbereich (Pi, Ti) arbeitet als ihre Folgestufe Si+1, wobei jede Stufe Si einen Verdampfer Ei und einen Kondensator Ci umfasst, wobei jeder Verdampfer Ei und jeder Kondensator Ci einen druckfesten Behälter (2) umfasst mit einem oberen Sprüheinlass (3) zum Einleiten und Versprühen von zugefügter Flüssigkeit (4a) im Behälter (2), sowie mit einem unteren Auslass (5), zum Auslassen von im Behälter (2) aufgefangener Flüssigkeit (4b), sowie mit einem Dampfraum (6) zwischen dem Sprüheinlass (3) und der aufgefangenen Flüssigkeit (4b), wobei der Dampfraum (6) jedes Verdampfers Ei mit dem Dampfraum (6) des Kondensators Ci derselben Stufe Si über ein druckfestes Dampfrohr (7) mit derart grossem Querschnitt druckverbunden ist, dass sich im Betrieb der Druck Pi in den beiden Dampfräumen (6) einer Stufe Si stets ausgleichen kann, und wobei der Auslass (5) jedes Verdampfers Ei mit dem Sprüheinlass (3) des nächsten Verdampfers Ei+1 und der Auslass (5) des letzten Verdampfers En mit dem Sprüheinlass (3) des ersten Verdampfers E1 mit jeweils einer druckfesten Flüssigkeitsleitung (8) zu einem Verdampfer Kreislauf verbunden ist, und wobei der Auslass (5) jedes Kondensators Ci mit dem Sprüheinlass (3) des vorherigen Kondensators Ci-1 und der Auslass (5) des ersten Kondensators C1 mit dem Sprüheinlass (3) des letzten Kondensators Cn mit einer druckfesten Flüssigkeitsleitung (9) zu einem Kondensator Kreislauf verbunden ist, **dadurch gekennzeichnet, dass** mindestens eine druckfeste Dampfleitung (10) mit einem ersten Ende mit einer der druckfesten Flüssigkeitsleitungen (9) zwischen Kondensatoren Ci+1 und Ci oder mit der druckfesten Flüssigkeitsleitung (8) zwischen den Verdampfern En und E1, und mit einem zweiten Ende mit einem Dampfraum verbunden ist, der im Betrieb einen höheren Druck P aufweist als der Druck Pi im Dampfraum (6) des Kondensators Ci resp. als der Druck Pn im Dampfraum (6) des Verdampfers En, zum Beaufschlagen der Flüssigkeit (4) mit einen höheren Druck sowie zum Fördern der Flüssigkeit (4).

2. Destillationsanlage nach Anspruch 1, **dadurch gekennzeichnet, dass** der Dampfraum mit dem Druck P ein Dampfraum (6) der Destillationsanlage ist.

3. Destillationsanlage nach Anspruch 1 oder 2, **gekennzeichnet durch** je eine Pumpe (11) in der Flüssigkeitsleitung (8) des Verdampfer Kreislaufs sowie in der Flüssigkeitsleitung (9) des Kondensator Kreislaufs, zum Erreichen der vorgegebenen Drucke der Flüssigkeiten (4) bei Prozessbeginn.

4. Destillationsanlage nach einem der vorhergehenden Ansprüche, **gekennzeichnet durch** eine Heizung (12) in der Flüssigkeitsleitung (8) des Verdampfer Kreislaufs vor dem Verdampfer E1 und ein Kühlaggregat (13) in der Flüssigkeitsleitung des Kondensator Kreislaufs vor dem Kondensator Cn zum Erzielen der vorgegebenen Temperaturen im Verdampfer E1 und im Kondensator Cn.

5. Destillationsanlage nach Anspruch 4, **dadurch gekennzeichnet, dass** die Heizung (12) und das Kühlaggregat (13) teilweise zusammen als Wärmetauscher (14) ausgestaltet sind.

6. Destillationsanlage nach einem der vorhergehenden Ansprüche, **dadurch gekennzeichnet, dass** in den Flüssigkeitsleitungen (9, 8) zwischen den Kondensatoren Cn bis C1 und/oder zwischen den Verdampfern E1 bis En Siphons (15) angeordnet sind zum Verhindern des Leerlaufens einzelner Kondensatoren Ci und/oder Verdampfern Ei bei Systemstillstand.

7. Destillationsanlage nach einem der vorhergehenden Ansprüche, **dadurch gekennzeichnet, dass** jeder Kondensator Ci am Ende des Destillationsweges eine mit einer Vakuumpumpe (16) verbundenen Gasleitung (17) aufweist zum Entfernen von nicht kondensierbaren Gasen von den Dampfräumen (6).

8. Destillationsanlage nach einem der vorhergehenden Ansprüche, **dadurch gekennzeichnet, dass** jeder Verdampfer Ei+1 auf einem derart tieferem Niveau angeordnet ist als der vorhergehende Verdampfer Ei, dass während der Ausführung des Prozesses die Flüssigkeit (4) alleine durch Druck- und Niveauunterschiede von jedem Verdampfer Ei in den jeweils folgen Verdampfer Ei+1 fliesst, ohne dass dafür eine elektrisch betriebene Pumpe notwendig ist.

9. Destillationsanlage nach einem der vorhergehenden Ansprüche, **dadurch gekennzeichnet, dass** jeder Kondensator Ci+1 auf einem derart gelegenem Niveau im Vergleich zu seinem folgendem Kondensator Ci angeordnet ist, dass während der Prozessausführung die Flüssigkeit vom Kondensator Ci+1 durch Druck-, Niveauunterschiede und/oder durch die Förderkraft einer Dampfleitung in den jeweils nächsten Kondensator Ci fliesst, ohne dass dafür eine elektrisch betriebene Pumpe notwendig ist.

10. Destillationsanlage nach einem der vorhergehenden Ansprüche, **dadurch gekennzeichnet, dass** die Kondensatoren C1 und Cn derart nivelliert angeordnet sind, dass während der Prozessausführung die Flüssigkeit (4) durch Druck- und Niveauunterschiede über die Flüssigkeitsleitung (9) des Kondensator Kreislaufs vom Kondensator C1 zum Kondensator Cn fliesst, ohne dass dafür eine elektrisch betriebene Pumpe notwendig ist.

11. Destillationsanlage nach einem der vorhergehenden Ansprüche, **dadurch gekennzeichnet, dass** die Verdampfer En und E1 derart nivelliert angeordnet sind, dass während der Prozessausführung die Flüssigkeit (4) durch Druck- und Niveauunterschiede und durch die Förderkraft einer oder mehrerer Dampfleitungen (10) über die Flüssigkeitsleitung (8) des Verdampfer Kreislaufs vom Verdampfer En zum Verdampfer E1 fliesst, ohne dass dafür eine elektrisch betriebene Pumpe notwendig ist.

12. Destillationsanlage nach einem der vorhergehenden Ansprüche, **dadurch gekennzeichnet, dass** mindestens die Behälter (2) des ersten Kondensators C1 und des letzten Verdampfers En je einen Pegelsensor (23) umfassen zum Ermitteln der Pegel der in den Behältern (2) aufgefangenen Flüssigkeit (4b).

13. Destillationsanlage nach einem der vorhergehenden Ansprüche, **dadurch gekennzeichnet, dass** im Verdampfungskreislauf, vorzugsweise im Bereich des letzten Verdampfers En ein Sensor (24) zur Messung der Konzentration der Rückstände angeordnet ist.

14. Verfahren zum Betreiben eines Destillationsprozesses unter Verwendung einer Destillationsanlage (1) nach einem der vorhergehenden Ansprüche, umfassend einen Zulauf (18) in den Verdampfer Kreislauf, zum Zuführen von zu destillierender Flüssigkeit (4), sowie einen Auslass (19) aus dem Verdampfer Kreislauf zum Auslassen von Flüssigkeit mit hoher Konzentration der Rückstände, sowie einen Destillat-Auslass (20) aus dem Kondensator Kreislauf zum Auslassen des durch die Anlage erzeugten Destillats (21), **gekennzeichnet durch** die folgenden Prozessschritte
a. Überwachen der Flüssigkeitspegel im Verdampfer Kreislauf und im Kondensator Kreislauf;
b. Überwachen der Konzentration der Rückstände im Verdampfer Kreislauf;
c. Auslassen von Flüssigkeit mit hoher Konzentration der Rückstände am Auslass (19), sobald der Flüssigkeitspegel im Verdampfer Kreislauf einen vorgegebenen Maximalpegel und/oder die Konzentration der Rückstände im Verdampfer Kreislauf einen vorgegebenen Maximalwert erreicht hat;
d. Auslassen von Destillat aus dem Kondensator Kreislauf am Destillat-Auslass (20), sobald der Flüssigkeitspegel im Kondensator Kreislauf einen vorgegebenen Maximalpegel erreicht hat;
e. Einlass von Flüssigkeit (4) in den Kondensator Kreislauf am Zulauf (18), sobald der Flüssigkeitspegel im Verdampfer Kreislauf einen vorgegebenen Minimalwert und/oder die Konzentration der Rückstände im Verdampfer Kreislauf einen vorgegebenen Maximalwert erreicht hat.
f. Wiederholen der Schritte a. bis e. solange, bis der Prozess gestoppt werden soll.

15. Verfahren nach Anspruch 14, wobei jeder Kondensator Ci am Ende des Destillationsweges eine mit einer Vakuumpumpe (16) verbundenen Gasleitung (17) aufweist, **gekennzeichnet durch** die Verfahrensschritte
a. Bestimmung der Temperaturdifferenzen dTi in den Dampfräumen (6) der Behälter (2) von Verdampfer Ei und Kondensator Ci derselben Stufe Si;
b. Entfernen von nicht kondensierbaren Gasen im Dampfraum (6) des Kondensators Ci durch die Gasleitung (17) mit Hilfe der Vakuumpumpe (16), sobald die Temperaturdifferenz dTi einen vorgegebenen Maximalwert erreicht hat, bis dTi einen vorgegebenen Minimalwert erreicht hat;
c. Wiederholen der Schritte a. und b. solange, bis der Prozess gestoppt werden soll.

## Claims

1. A multistage distillation system (1) with stages Si, where i=1, ...n, wherein each stage Si works in a higher pressure and temperature range (Pi, Ti) than its ensuing stage Si+1 during operation, wherein each stage Si encompasses an evaporator Ei and a capacitor Ci, wherein each evaporator Ei and each condenser Ci encompasses a pressure-tight container (2) with an upper spray inlet (3) for introducing and spraying added liquid (4a) in the container, (2), as well as with a lower outlet (5) for letting out liquid (4b) captured in the container (2), as well as with a steam space (6) between the spray inlet (3) and the captured liquid (4b), wherein the steam space (6) of each evaporator Ei is compressively bonded with the steam space (6) of the condenser Ci of the same stage Si by a pressure-tight steam pipe (7) with a cross section large enough that the pressure Pi in the two steam spaces (6) of one stage Si can always balance itself out during operation, and wherein the outlet (5) of each evaporator Ei is connected with the spray inlet (3) of the next evaporator Ei+1 and the outlet (5) of the last evaporator En is connected with the spray inlet (3) of the first evaporator E1 by a respective pressure-tight liquid line (8) to yield an evaporator circuit, **characterized in that** at least one pressure-tight steam line (10) is connected at a first end with one of the pressure-tight liquid lines (9) between condensers Cl+1 and Ci or with the pressure-tight liquid line (8) between the evaporators En and E1, and at a second end with a steam space having a higher pressure P during operation than the pressure Pi in the steam space (6) of the condenser Ci or than the pressure P1 in the steam space (6) of the evaporator E1, so as to pressurize the liquid (4) with a higher pressure and convey the liquid (4).

2. The distillation system according to claim 1, **characterized in that** the steam space with pressure P is a steam space (6) of the distillation system.

3. The distillation system according to claim 1 or 2, **characterized by** a respective pump (11) in the liquid line (8) of the evaporator circuit, as well as in the liquid line (9) of the condenser circuit, for achieving the prescribed pressures of the liquids (4) at the beginning of the process.

4. The distillation system according to one of the preceding claims, **characterized by** a heater (12) in the liquid line (8) of the evaporator circuit before the evaporator E1 and a cooling aggregate (13) in the liquid line of the condenser circuit before the condenser Cn for achieving the prescribed temperatures in the evaporator E1 and in the condenser Cn.

5. The distillation system according to claim 4, **characterized in that** the heater (12) and cooling aggregate (13) are together at least partially configured as a heat exchanger (14).

6. The distillation system according to one of the preceding claims, **characterized in that** siphons (15) are arranged in the liquid lines (9, 8) between the condensers Cn to C1 and/or between the evaporators E1 to En, so as to prevent individual condensers Ci and/or evaporators Ei from idling given a system shutdown.

7. The distillation system according to one of the preceding claims, **characterized in that** each condenser Ci has a gas line (17) connected with a vacuum pump (16) at the end of the distillation path to remove incondensable gases from the steam spaces (6).

8. The distillation system according to one of the preceding claims, **characterized in that** each evaporator Ei+1 is arranged on a lower level than the preceding evaporator Ei in such a way that the liquid (4) is made to flow from each evaporator Ei into the respectively ensuing evaporator Ei+1 solely by pressure and level differences during implementation of the process, without an electrically operated pump being required for this purpose.

9. The distillation system according to one of the preceding claims, **characterized in that** each condenser Ci+1 is arranged at such a level by comparison to its ensuing condenser Ci that the liquid is made to flow from the condenser Ci + 1 into the respective ensuing condenser Ci by pressure and level differences and/or the conveying force of a steam line during process implementation, without an electrically operated pump being required for this purpose.

10. The distillation system according to one of the preceding claims, **characterized in that** the condensers C1 and Cn are leveled in such a way that the liquid (4) of the condenser C1 is made to flow from the condenser C1 to the condenser Cn via the liquid line (9) of the condenser circuit by pressure and level differences during process implementation, without an electrically operated pump being required for this purpose.

11. The distillation system according to one of the preceding claims, **characterized in that** the evaporators En and E1 are leveled in such a way that the liquid (4) is made to flow from the evaporator En to the evaporator E1 by pressure and level differences and by the conveying force of one or more steam lines (10) via the liquid line (8) of the evaporator circuit during process implementation, without an electrically operated pump being required for this purpose.

12. The distillation system according to one of the preceding claims, **characterized in that** at least the containers (2) of the first condenser C1 and the last evaporator En each encompass a level sensor (23) for determining the level of liquid (4b) captured in the containers (2).

13. The distillation system according to one of the preceding claims, **characterized in that** a sensor (24) is arranged in the evaporation circuit, preferably in the area of the last evaporator En, for measuring the concentration of residues.

14. A method for implementing a distillation process using a distillation system (1) according to one of the preceding claims, comprising a feed (18) in the evaporator circuit for supplying liquid (4) to be distilled, along with an outlet (19) from the evaporator circuit for letting out liquid with a high concentration of residues, as well as a distillate outlet (20) from the condenser circuit for letting out the distillate (21) generated by the system, **characterized by** the following procedural steps:
a. Monitoring the liquid level in the evaporator circuit and in the condenser circuit;
b. Monitoring the concentration of residues in the evaporator circuit;
c. Letting out liquid with a high concentration of residues at the outlet (19) as soon as the liquid level in the evaporator circuit has reached a prescribed maximum level and/or the concentration of residues in the evaporator circuit has reached a prescribed maximum value;
d. Letting out distillate from the condenser circuit at the distillate outlet (20) as soon as the liquid level in the condenser circuit has reached a prescribed maximum level;
e. Letting liquid (4) into the condenser circuit at the feed (18) as soon as the liquid level in the evaporator circuit has reached a prescribed minimum value and/or the concentration of residues in the evaporator circuit has reached a prescribed maximum value.
f. Repeating steps a. to e. until the process is to be stopped.

15. The method according to claim 18, **characterized in that** each condenser Ci has a gas line (17) connected with a vacuum pump (16) at the end of the distillation path, **characterized by** the following procedural steps:
a. Determining the temperature differences dTi in the steam spaces (6) of the containers (2) of evaporators Ei and condensers Ci of the same stage Si;
b. Removing incondensable gases in the steam space (6) of the condenser Ci through the gas line (17) using the vacuum pump (16) as soon as the temperature difference dTi has reached a prescribed maximum value, until dTi has reached a prescribed minimum value;
c. Repeating steps a. and b. until the process is to be stopped.

## Revendications

1. Installation de distillation à plusieurs niveaux (1) avec des niveaux Si à i=1,....n, chaque niveau Si fonctionnant en service dans une plage de pressions et de températures (Pi,Ti) plus élevée que son niveau séquentiel Si+1, chaque niveau Si comprenant un évaporateur Ei et un condensateur Ci, chaque évaporateur Ei et chaque condensateur Ci comprenant un réservoir (2) résistant à la pression avec une entrée de pulvérisation supérieure (3) pour introduire et pulvériser du liquide ajouté (4a) dans le réservoir (2), ainsi qu'avec une sortie inférieure (5) pour faire sortir le liquide (4b) recueilli dans le réservoir (2), ainsi qu'avec un compartiment de vapeur (6) entre l'entrée de pulvérisation (3) et le liquide recueilli (4b), le compartiment de vapeur (6) de chaque évaporateur Ei étant relié par pression au compartiment de vapeur (6) du condensateur Ci du même niveau Si par le biais d'un conduit de vapeur (7) résistant à la pression avec une grosse section de telle sorte que la pression Pi peut toujours s'équilibrer en service dans les deux compartiments de vapeur (6) d'un niveau Si et la sortie (5) de chaque évaporateur Ei étant reliée à l'entrée de pulvérisation (3) de l'évaporateur suivant Ei + 1 et la sortie (5) du dernier évaporateur En à l'entrée de pulvérisation (3) du premier évaporateur E1 avec respectivement une conduite de liquide résistante à la pression (8) à un circuit d'évaporateur et la sortie (5) de chaque condensateur Ci étant reliée à l'entrée de pulvérisation (3) du condensateur précédent Ci-1 et la sortie (5) du premier condensateur C1 à l'entrée de pulvérisation (3) du dernier condensateur Cn avec une conduite de liquide résistante à la pression (9) à un circuit de condensateur, **caractérisée en ce qu'**au moins une conduite de vapeur résistante à la pression (10) est reliée à une première extrémité avec une des conduites de liquide résistantes à la pression (9) entre les condensateurs Ci + 1 et Ci ou avec la conduite de liquide résistante à la pression (8) entre les évaporateurs En et E1 et à une deuxième extrémité avec un compartiment de vapeur, qui comporte en service une pression P plus élevée que la pression Pi dans le compartiment de vapeur (6) du condensateur Ci et que la pression Pn dans le compartiment de vapeur (6) de l'évaporateur En pour appliquer le liquide (4) avec une pression plus élevée ainsi que pour transporter le liquide (4).

2. Installation de distillation selon la revendication 1, **caractérisée en ce que** le compartiment de vapeur avec la pression P est un compartiment de vapeur (6) de l'installation de distillation.

3. Installation de distillation selon la revendication 1 ou 2, **caractérisée par** respectivement une pompe (11) dans la conduite de liquide (8) du circuit d'évaporateur ainsi que dans la conduite de liquide (9) du circuit de condensateur pour obtenir les pressions prédéfinies des liquides (4) au début du procédé.

4. Installation de distillation selon l'une quelconque des revendications précédentes, **caractérisée par** un chauffage (12) dans la conduite de liquide (8) du circuit d'évaporateur avant l'évaporateur E1 et un groupe de réfrigération (13) dans la conduite de liquide du circuit de condensateur avant le condensateur Cn pour atteindre les températures prédéfinies dans l'évaporateur E1 et dans le condensateur Cn.

5. Installation de distillation selon la revendication 4, **caractérisée en ce que** le chauffage (12) et le groupe de réfrigération (13) sont équipés ensemble en partie comme un échangeur de chaleur (14).

6. Installation de distillation selon l'une quelconque des revendications précédentes, **caractérisée en ce que** des siphons (15) sont disposés dans les conduites de liquide (9,8) entre les condensateurs Cn à C1 et/ou entre les évaporateurs E1 à En pour éviter le fonctionnement à vide des condensateurs individuels Ci et/ou des évaporateurs Ei à l'arrêt du système.

7. Installation de distillation selon l'une quelconque des revendications précédentes, **caractérisée en ce que** chaque condensateur Ci comporte à l'extrémité du parcours de distillation une conduite de gaz (17) reliée à une pompe à vide (16) pour éliminer les gaz non condensables des compartiments de vapeur (6).

8. Installation de distillation selon l'une quelconque des revendications précédentes, **caractérisée en ce que** chaque évaporateur Ei+1 est disposé sur un niveau plus profond que l'évaporateur précédent Ei de telle manière que pendant l'exécution du procédé, le liquide (4) s'écoule seulement par les différences de pression et de niveau de chaque évaporateur Ei dans l'évaporateur respectivement suivant Ei+1 sans qu'une pompe électrique ne soit nécessaire pour cela.

9. Installation de distillation selon l'une quelconque des revendications précédentes, **caractérisée en ce que** chaque condensateur Ci+1 est disposé sur un niveau posé en comparaison de son condensateur suivant Ci compartiment de vapeur de telle manière que pendant la réalisation du procédé, le liquide s'écoule du condensateur Ci+1 par les différences de pression et de niveau et/ou par la force de transport d'une conduite de vapeur dans le condensateur respectivement suivant sans qu'une pompe électrique ne soit nécessaire pour cela.

10. Installation de distillation selon l'une quelconque des revendications précédentes, **caractérisée en ce que** les condensateurs C1 et Cn sont disposés à niveau de telle sorte que pendant la réalisation du procédé, le liquide (4) s'écoule par les différences de pression et de niveau par la conduite de liquide (9) du circuit de du condensateur C1 vers le condensateur Cn, sans qu'une pompe électrique ne soit nécessaire pour cela.

11. Installation de distillation selon l'une quelconque des revendications précédentes, **caractérisée en ce que** les évaporateurs En et E1 sont disposés à niveau de telle sorte que pendant la réalisation du procédé, le liquide (4) s'écoule par les différences de pression et de niveau et par la force de transport d'une ou plusieurs conduites de vapeur (10) par le biais de la conduite de liquide (8) du circuit d'évaporateur de l'évaporateur En vers l'évaporateur E1, sans qu'une pompe électrique ne soit nécessaire pour cela.

12. Installation de distillation selon l'une quelconque des revendications précédentes, **caractérisée en ce qu'**au moins les réservoirs (2) du premier condensateur C1 et du dernier évaporateur En comprennent respectivement un capteur de niveau (23) pour déterminer les niveaux du liquide (4b) recueilli dans les réservoirs (2).

13. Installation de distillation selon l'une quelconque des revendications précédentes, **caractérisée en ce que** dans le circuit d'évaporation, un capteur (24) est disposé de préférence à proximité du dernier évaporateur En pour mesurer la concentration des résidus.

14. Procédé pour faire fonctionner un processus de de distillation en utilisant une installation de distillation (1) selon l'une quelconque des revendications précédentes, comprenant une arrivée (18) dans le circuit d'évaporateur, pour acheminer du liquide distillé (4), ainsi qu'une sortie (19) du circuit d'évaporateur pour faire sortir du liquide à haute concentration de résidus, ainsi qu'une sortie de distillat (20) du circuit de condensateur pour faire sortir du distillat (21) généré par l'installation, **caractérisé par** les étapes de procédé suivantes :
a. surveillance du niveau de liquide dans le circuit d'évaporateur et dans le circuit de condensateur,
b. surveillance de la concentration des résidus dans le circuit d'évaporateur,
c. écoulement du liquide à haute concentration de résidus à la sortie (19), dès que le niveau de liquide dans le circuit d'évaporateur a atteint un niveau maximal prédéfini et/ou la concentration de résidus dans le circuit d'évaporateur a atteint une valeur maximale prédéfinie,
d. écoulement du distillat du circuit de condensateur à la sortie de distillat (20) dès que le niveau de liquide dans le circuit de condensateur a atteint un niveau maximal prédéfini,
e. introduction de liquide (4) dans le circuit de condensateur à l'arrivée (18) dès que le niveau de liquide dans le circuit d'évaporateur a atteint une valeur minimale prédéfinie et/ou que la concentration de résidus dans le circuit d'évaporateur a atteint une valeur maximale prédéfinie.
f. Répétition des étapes a à e jusqu'à ce que le processus doit être arrêté.

15. Procédé selon la revendication 14, chaque condensateur Ci à la fin du parcours de distillation comportant une conduite de gaz (17) reliée à une pompe à vide (16), **caractérisé par** les étapes de procédé :
a. détermination des différences de température dTi dans les compartiments de vapeur (6) des réservoirs (2) de l'évaporateur Ei et du condensateur Ci de même niveau Si,
b. élimination des gaz non condensés dans le compartiment de vapeur (6) du condensateur Ci par la conduite de gaz (17) à l'aide de la pompe à vide (16), dès que la différence de température dTi a atteint une valeur maximale prédéfinie, jusqu'à ce que dTi ait atteint une valeur minimale prédéfinie,
c. répétition des étapes a et b jusqu'à ce que le processus doit être arrêté.
